# EUROPEAN PATENT APPLICATION

(11) **EP 4 793 582 A1**
(43) Date of publication of application: **19.08.2026**
(21) Application number: 24877543.9
(22) Date of filing: 11.10.2024
(51) Int. Cl.: F27B 9/14, F27B 9/26, F27D 5/00, H01M 4/02

(54) **APPARATUS FOR FIRING CATHODE MATERIAL OF SECONDARY BATTERY**

(30) Priority: 11.10.2023 KR 20230135204
(71) Applicant: POSCO Holdings Inc., Pohang-si, Gyeongsangbuk-do 37859 (KR); Research Institute of Industrial Science & Technology, Pohang-si, Gyeongsangbuk-do 37673 (KR)
(72) Inventor: YANG, Choongmo, Pohang-si, Gyeongsangbuk-do 37673 (KR); HEO, Jeong Heon, Pohang-si, Gyeongsangbuk-do 37664 (KR); HWANG, Min Young, Pohang-si, Gyeonggi-do 37560 (KR); JUNG, Keeyoung, Pohang-si, Gyeongsangbuk-do 37673 (KR); PARK, Yooncheol, Pohang-si, Gyeongsangbuk-do 37673 (KR); HAN, Chang Joo, Seongnam-si, Gyeonggi-do 13474 (KR); HWANG, Soon Cheol, Pohang-si, Gyeongsangbuk-do 37671 (KR)
(74) Representative: Zacco Sweden AB
(86) International application number: PCT/KR2024/015380
(87) International publication number: WO 2025/080007

(57) **Abstract**

An apparatus for calcining a positive electrode material of a secondary battery comprises a temperature rising section extending in a first direction of a horizontal direction, a temperature maintaining section connected to the temperature rising section and extending in the first direction, and a cooling section connected to the temperature maintaining section and extending in a second direction different from the first direction in the horizontal direction.

## Description

### [Technical Field]

The present disclosure relates to an apparatus for calcining a positive electrode material of a secondary battery.

### [Background Art]

Generally, an apparatus for calcining a positive electrode material of a secondary battery is a device that calcines a sagger, which accommodates the positive electrode material, in a calcination furnace at a temperature set according to the characteristics of the material.

Conventional calcining apparatuses for secondary battery positive electrode materials extend in a single direction and include a temperature rising section, a temperature maintaining section, and a cooling section to calcine the positive electrode material accommodated in the sagger.

### [Summary of Invention]

### [Technical Problem]

An embodiment of the present invention is directed to providing an apparatus for calcining a positive electrode material of a secondary battery with increased production capacity.

### [Technical Solution]

One aspect provides an apparatus for calcining a positive electrode material of a secondary battery by moving a sagger accommodating the positive electrode material of the secondary battery in a horizontal direction for calcination, the apparatus comprising: a temperature rising section extending in a first direction of the horizontal direction; a temperature maintaining section connected to the temperature rising section and extending in the first direction; and a cooling section connected to the temperature maintaining section and extending in a second direction different from the first direction in the horizontal direction, wherein the sagger passes from the temperature rising section through the temperature maintaining section and through the cooling section.

The second direction may be an opposite direction to the first direction.

The sagger comprises a plurality of saggers, and the plurality of saggers may move in the horizontal direction while forming a plurality of rows.

A row interval between the plurality of saggers in the temperature maintaining section may be narrower than a row interval between the plurality of saggers in the cooling section.

A row interval between the plurality of saggers in the cooling section may be wider than a row interval between the plurality of saggers in the temperature maintaining section.

A width of the cooling section in the horizontal direction may be greater than a width of the temperature maintaining section in the horizontal direction.

The cooling section may comprise a first connection section connected to the temperature maintaining section and extending in a third direction intersecting the first direction and the second direction in the horizontal direction, and a first section connected to the first connection section and extending in the second direction.

The first section may have a lower temperature than the first connection section.

The cooling section may comprise a second section connected to the temperature maintaining section and extending in the first direction, a second connection section connected to the second section and extending in a third direction intersecting the first direction and the second direction in the horizontal direction, and a third section connected to the second connection section and extending in the second direction.

The second section and the third section may have a lower temperature than the second connection section.

A length of the third section may be longer than a length of the second section.

The apparatus may further comprise a transfer section connecting the cooling section and the temperature rising section and transferring the sagger from the cooling section to the temperature rising section.

A temperature of the temperature maintaining section may be higher than a temperature of the temperature rising section and a temperature of the cooling section.

The sagger comprises a plurality of saggers, and the temperature maintaining section may include a heating means positioned between adjacent saggers among the plurality of saggers.

The cooling section may comprise a cooling means positioned between adjacent saggers among the plurality of saggers.

### [Advantageous Effects]

According to an embodiment, an apparatus for calcining a positive electrode material of a secondary battery with increased production capacity of the positive electrode material is provided.

### [Brief Description of Drawings]

FIG. 1 is a view illustrating an apparatus for calcining a positive electrode material of a secondary battery according to an embodiment.
FIG. 2 is a view illustrating a part of an apparatus for calcining a positive electrode material of a secondary battery according to an embodiment.
FIG. 3 is a view illustrating an example of a plurality of saggers moving from a temperature maintaining section to a cooling section in an apparatus for calcining a positive electrode material of a secondary battery according to an embodiment.
FIG. 4 is a view illustrating apparatuses for calcining a positive electrode material of a secondary battery according to another embodiment.
FIG. 5 is a view illustrating apparatuses for calcining a positive electrode material of a secondary battery according to yet another embodiment.

### [Detailed Description]

Hereinafter, embodiments of the present invention will be described in detail with reference to the accompanying drawings so that those skilled in the art to which the present invention pertains can easily implement them. The present invention may be implemented in many different forms and is not limited to the embodiments described herein.

In order to clearly describe the present invention, parts irrelevant to the description are omitted, and the same or similar constituent elements are assigned the same reference numerals throughout the specification.

Also, throughout the specification, when a certain part "comprises, and/or includes" a certain constituent element, it means that other constituent elements may be further included rather than excluding other constituent elements, unless specifically stated to the contrary.

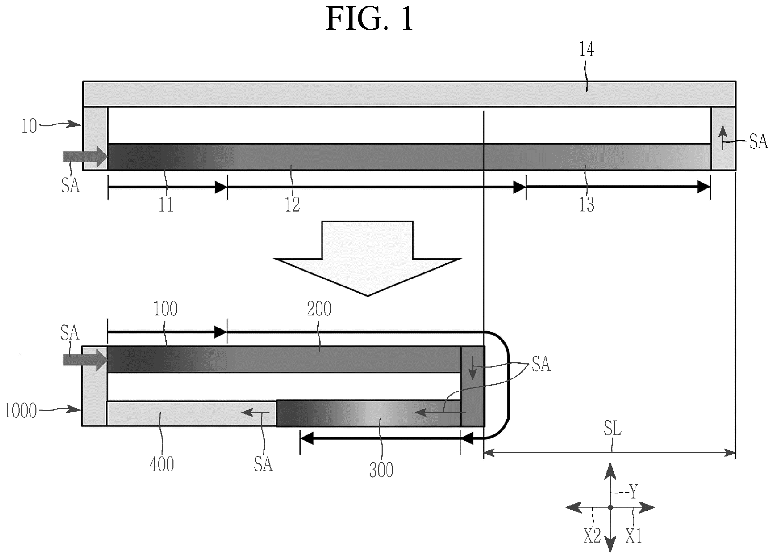

Hereinafter, an apparatus for calcining a positive electrode material of a secondary battery according to an embodiment will be described with reference to FIGS. 1 to 3.

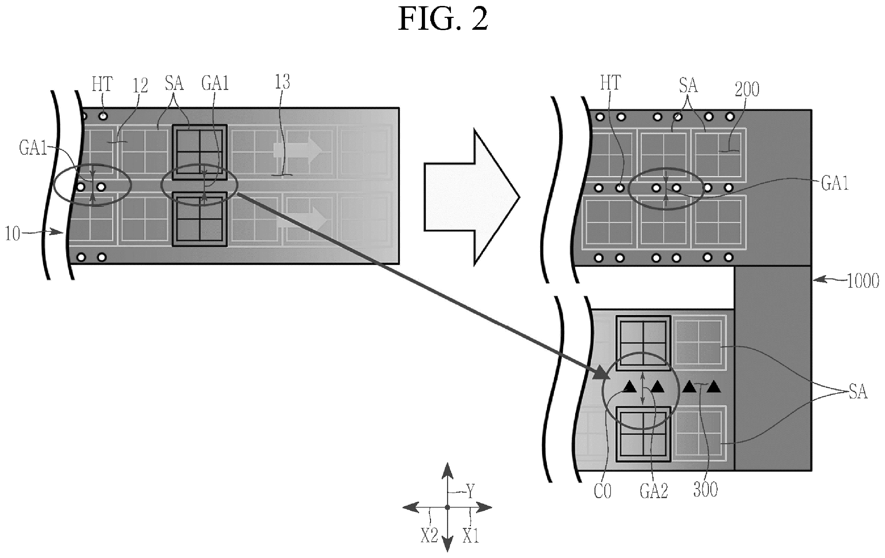

FIG. 1 is a view illustrating an apparatus for calcining a positive electrode material of a secondary battery according to an embodiment. FIG. 2 is a view illustrating a part of an apparatus for calcining a positive electrode material of a secondary battery according to an embodiment.

FIGS. 1 and 2 are plan views schematically illustrating an apparatus for calcining a positive electrode material of a secondary battery. Although a conventional apparatus for calcining a positive electrode material of a secondary battery is also illustrated in FIGS. 1 and 2, the conventional apparatus for calcining a positive electrode material of a secondary battery is not limited to the structures shown in FIGS. 1 and 2 and may have various known structures.

Referring to FIGS. 1 and 2, a conventional apparatus 10 for calcining a positive electrode material of a secondary battery extends in a first direction X₁ and moves a plurality of saggers SA, in which the positive electrode material of the secondary battery is accommodated, in the first direction X₁ while performing heating, temperature maintenance, and cooling to move the positive electrode material of the secondary battery accommodated in the plurality of saggers SA in a vertical direction for calcination. The conventional apparatus 10 for calcining a positive electrode material of a secondary battery includes a temperature rising section 11, a temperature maintaining section 12, a cooling section 13 connected and extending in the first direction X₁, and a transfer section 14 connecting between the cooling section 13 and the temperature rising section 11.

In order to increase the productivity of calcining the positive electrode material in the conventional apparatus 10 for calcining a positive electrode material of a secondary battery, methods such as increasing the input amount of the positive electrode material, increasing the calcination length, and shortening the calcination time may be used.

Increasing the input amount of the positive electrode material may include a method of increasing the number of rows or the number of tiers of the sagger SA accommodating the positive electrode material and a method of increasing the weight of the positive electrode material accommodated in the sagger SA.

In the case of increasing the number of rows or the number of tiers of the sagger SA, due to the difference in heat transfer according to the positions of the saggers SA, a temperature deviation occurs in the saggers SA, resulting in a quality deviation in the calcined positive electrode material.

In the case of increasing the weight of the positive electrode material accommodated in the sagger SA, a temperature deviation occurs inside the sagger SA of increased size, resulting in a quality deviation in the calcined positive electrode material.

In addition, an increase in the number of saggers SA and the weight of the positive electrode material increases the load on the lower structure of the conventional apparatus 10 for calcining a positive electrode material of a secondary battery. When the lower structure includes a ceramic material, the increase in the number of saggers SA and the weight of the positive electrode material is limited to a range in which damage to the lower structure does not occur, so there is a limit to increasing the production amount of the positive electrode material.

Increasing the calcination length is a principle in which the production per hour is increased by increasing the transfer speed of the sagger SA assuming the same calcination time; therefore, various equipment problems occur due to the increase in the transfer speed of the sagger SA. For example, in the case of a Roller Hearth Kiln (RHK), as the calcination length becomes longer, meandering occurs in the moving sagger SA, causing a problem that the alignment of the sagger SA is shifted inside the calcination furnace. As another example, in the case of a Pusher kiln, as the calcination length becomes longer, the frictional force between a setter plate and the lower structure increases, making it physically difficult to transfer the sagger SA as well as making it difficult to ensure mechanical stability.

Shortening the calcination time is a method of shortening the calcination time, which is the residence time of the sagger SA in the calcination furnace, by increasing the transfer speed of the sagger SA in order to increase the calcination productivity in the calcination furnace. Such shortening of the calcination time causes various equipment problems similar to the increase in the calcination length described above. In addition, the calcination time is divided into a temperature rising time, a temperature maintaining time, and a cooling time. Since it is necessary to maintain a set temperature maintaining time to ensure the calcination quality of the positive electrode material, shortening the calcination time is possible only when the temperature rising time and the cooling time are shortened. The cooling section 13 compared to the temperature rising section 11 of the apparatus 10 for calcining a positive electrode material of a secondary battery cools the positive electrode material by directly spraying a cooling gas on the positive electrode material, cools the positive electrode material using a heat exchange pipe in the calcination furnace, or cools the positive electrode material by indirectly cooling the outside of the calcination furnace. Since it is necessary to cool the sagger SA itself and the entire positive electrode material accommodated in the sagger SA, it is difficult to shorten the cooling time in an actual calcination furnace. That is, in order to shorten the calcination time, it is necessary to secure an effective cooling method.

An apparatus 1000 for calcining a positive electrode material of a secondary battery according to an embodiment, in which the production amount of the positive electrode material is increased by solving the problems of the conventional apparatus 10 for calcining a positive electrode material of a secondary battery described above, will be described.

Referring to FIGS. 1 and 2, an apparatus 1000 for calcining a positive electrode material of a secondary battery according to an embodiment moves a plurality of saggers SA, in which the positive electrode material of the secondary battery which may have various forms such as a granule or briquette form is accommodated, in a horizontal direction while performing temperature rising, temperature maintenance, and cooling of the positive electrode material accommodated in the saggers SA for calcination.

The apparatus 1000 for calcining a positive electrode material of a secondary battery includes a temperature rising section 100, a temperature maintaining section 200, a cooling section 300, and a transfer section 400.

In an embodiment, the plurality of saggers SA may pass from the temperature rising section 100 through the temperature maintaining section 200 and through the cooling section 300, and the plurality of saggers SA that have passed through the cooling section 300 may be moved back to the temperature rising section 100 via the transfer section 400.

The plurality of saggers SA are moving in the horizontal direction while forming two rows in the temperature rising section 100, the temperature maintaining section 200, the cooling section 300, and the transfer section 400, but are not limited thereto, and the plurality of saggers SA may move in the horizontal direction while forming one row or a plurality of rows. In addition, the plurality of saggers SA may be stacked in a single layer or multiple layers to move in the horizontal direction through the temperature rising section 100, the temperature maintaining section 200, the cooling section 300, and the transfer section 400.

The temperature rising section 100 extends in a first direction X₁ of the horizontal direction. The temperature rising section 100 is a section in which the temperature is raised to a temperature set according to the characteristics of the positive electrode material of the secondary battery accommodated in the plurality of saggers SA. The temperature rising section 100 includes various known heating means for raising the temperature of the positive electrode material of the secondary battery accommodated in the sagger SA to a set temperature.

The temperature maintaining section 200 is connected to the temperature rising section 100 and extends in the first direction X₁ of the horizontal direction. The temperature maintaining section 200 is a section for maintaining a temperature set according to the characteristics of the positive electrode material of the secondary battery. A temperature of the temperature maintaining section 200 may be higher than a temperature of the temperature rising section 100 and a temperature of the cooling section 300. The temperature maintaining section 200 includes various known temperature maintaining means for maintaining the positive electrode material of the secondary battery accommodated in the sagger SA at a set temperature. For example, in FIG. 2, the temperature maintaining section 200 may include a heater HT positioned between adjacent saggers SA, but is not limited thereto.

The cooling section 300 is connected to the temperature maintaining section 200 and extends in a second direction X₂ different from the first direction X₁ in the horizontal direction. The cooling section 300 is a section for cooling the positive electrode material of the secondary battery. The cooling section 300 includes various known cooling means for cooling the positive electrode material of the secondary battery accommodated in the sagger SA. For example, in FIG. 2, the cooling section 300 may include a cooling means CO such as a heat exchange pipe positioned between adjacent saggers SA, but is not limited thereto.

The cooling section 300 extends in the second direction X₂, which is an opposite direction to the first direction X₁ that is an extension direction of the temperature maintaining section 200. A space between the cooling section 300 and the temperature maintaining section 200 may have a "⊂"-shape or a curved shape, and at least one section among the cooling section 300 and the temperature maintaining section 200 may be curved. For example, an end of the temperature maintaining section 200 may be curved, an end of the cooling section 300 may be curved, or both the end of the temperature maintaining section 200 and the end of the cooling section 300 may be curved so that the cooling section 300 extends in the second direction X₂.

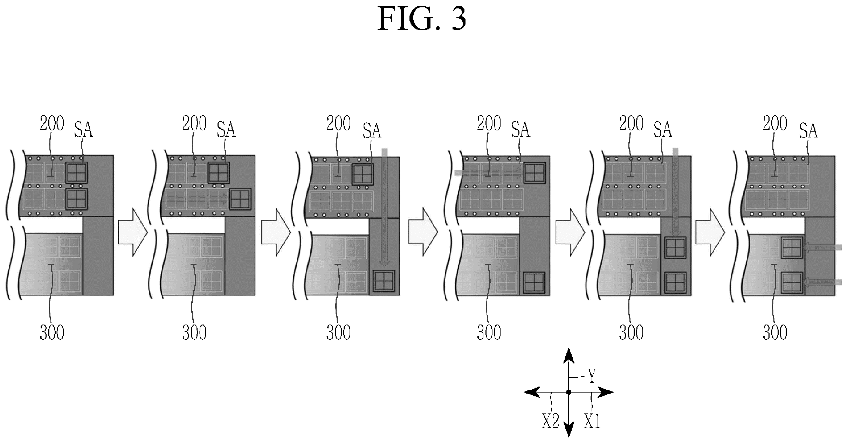

FIG. 3 is a view illustrating an example of a plurality of saggers moving from a temperature maintaining section to a cooling section in an apparatus for calcining a positive electrode material of a secondary battery according to an embodiment.

Referring to FIG. 3, the saggers SA forming a plurality of rows and moving in the first direction X₁ in the temperature maintaining section 200 may sequentially move to the cooling section 300 through a curved section between the temperature maintaining section 200 and the cooling section 300. The movement of the saggers SA moved from the temperature maintaining section 200 to the cooling section 300 may be performed through a moving means including various known pushers and rollers, but is not limited thereto.

Referring to FIG. 2, the cooling section 300 is curved from the temperature maintaining section 200 extending in the first direction X₁ of the horizontal direction to extend in the second direction X₂ of the horizontal direction, so that the cooling section 300 has a different form compared to the temperature maintaining section 200.

In the conventional apparatus 10 for calcining a positive electrode material of a secondary battery, the temperature maintaining section 12 and the cooling section 13 extend in the first direction X₁, so that a horizontal width of the temperature maintaining section 12 (for example, a width in a third direction Y intersecting the first direction X₁ and the second direction X₂) and a horizontal width of the cooling section 13 are the same. A row interval of the plurality of saggers SA of the conventional apparatus 10 for calcining a positive electrode material of a secondary battery has the same first interval GA₁ in the temperature maintaining section 12 and the cooling section 13.

In contrast, in the apparatus 1000 for calcining a positive electrode material of a secondary battery according to an embodiment, a horizontal width of the cooling section 300 is greater than a horizontal width of the temperature maintaining section 200. Alternatively, in the apparatus 1000 for calcining a positive electrode material of a secondary battery according to an embodiment, an interval of transfer means for transferring the saggers SA in the cooling section 300 is greater than an interval of transfer means for transferring the saggers SA in the temperature maintaining section 200. A row interval of the plurality of saggers SA of the apparatus 1000 for calcining a positive electrode material of a secondary battery according to an embodiment has the first interval GA₁ in the temperature maintaining section 200 and has a second interval GA₂ wider than the first interval GA₁ in the cooling section 300.

In the apparatus 1000 for calcining a positive electrode material of a secondary battery according to an embodiment, the row interval between the plurality of saggers SA in the temperature maintaining section 200 is narrower than the row interval between the plurality of saggers SA in the cooling section 300. Due to this, temperature maintenance can be efficiently performed on the positive electrode material of the secondary battery accommodated in the sagger SA in the temperature maintaining section 200.

In the apparatus 1000 for calcining a positive electrode material of a secondary battery according to an embodiment, the row interval between the plurality of saggers SA in the cooling section 300 is wider than the row interval between the plurality of saggers SA in the temperature maintaining section 200. Due to this, the cooling means CO may be positioned between the plurality of saggers SA in the cooling section 300, and an interval between adjacent saggers SA becomes wider, so that the positive electrode material of the secondary battery accommodated in the sagger SA can be efficiently cooled in the cooling section 300.

Referring to FIG. 1, the transfer section 400 connects between the cooling section 300 and the temperature rising section 100. Through the transfer section 400, the sagger SA in which the calcined positive electrode material is accommodated may be transferred from the cooling section 300 back to the temperature rising section 100, and the positive electrode material accommodated in the sagger SA may be discharged to the outside through an outlet located in at least one part of the transfer section 400 and the temperature rising section 100.

The apparatus 1000 for calcining a positive electrode material of a secondary battery according to an embodiment includes the temperature rising section 100 and the temperature maintaining section 200 extending in the first direction X₁ of the horizontal direction, and the cooling section 300 curved from the temperature maintaining section 200 and extending in the second direction X₂ of the horizontal direction, which is an opposite direction to the first direction X₁, so that the production amount of the positive electrode material is increased compared to the conventional apparatus 10 for calcining a positive electrode material of a secondary battery extending linearly in the first direction X₁.

Specifically, the apparatus 1000 for calcining a positive electrode material of a secondary battery according to an embodiment includes the temperature rising section 100 and the temperature maintaining section 200 extending in the first direction X₁ and the cooling section 300 extending in the second direction X₂, so that the calcination furnace extends in a "⊂"-shape as a whole and the cooling section 300 is separated from the temperature maintaining section 200; therefore, the total length is shortened by a shortened length SL in the first direction X₁, thereby saving the overall calcination space.

In addition, in the apparatus 1000 for calcining a positive electrode material of a secondary battery according to an embodiment, the cooling section 300 is separated from the temperature maintaining section 200. When the apparatus 1000 for calcining a positive electrode material of a secondary battery includes a Roller Hearth Kiln (RHK), the transport length of the sagger SA in the first direction X₁ by a transfer means such as a roller is reduced. When the apparatus 1000 for calcining a positive electrode material of a secondary battery includes a Pusher kiln, the transport length of the sagger SA in the first direction X₁ by a pusher is reduced, thereby ensuring overall mechanical stability.

In addition, in the apparatus 1000 for calcining a positive electrode material of a secondary battery according to an embodiment, the cooling section 300 is separated from the temperature maintaining section 200, making individual gas supply easier in the cooling section 300 compared to the temperature rising section 100 and the temperature maintaining section 200. Since a large amount of air, which is cheaper than oxygen, can be supplied to the cooling section 300, the manufacturing cost of the positive electrode material is reduced while the cooling effect of the positive electrode material is improved.

In addition, in the apparatus 1000 for calcining a positive electrode material of a secondary battery according to an embodiment, the cooling section 300 is separated from the temperature maintaining section 200 and an interval between adjacent saggers SA in the cooling section 300 becomes wider. Compared to the conventional apparatus 10 for calcining a positive electrode material of a secondary battery, cooling of the positive electrode material accommodated in the saggers SA is improved under the same conditions and the cooling time in the cooling section 300 is shortened. Therefore, the total calcination time is shortened and the production amount of the positive electrode material is increased.

That is, an apparatus 1000 for calcining a positive electrode material of a secondary battery is provided, which increases the production amount of the positive electrode material by overcoming mechanical limits that may occur when increasing the length of the calcination furnace for the positive electrode material of the secondary battery.

An apparatus 1000 for calcining a positive electrode material of a secondary battery is provided, which can save gas costs required for cooling in the cooling section 300.

An apparatus 1000 for calcining a positive electrode material of a secondary battery is provided, in which the production amount of the positive electrode material is increased by shortening the total calcination time by shortening the cooling time in the cooling section 300.

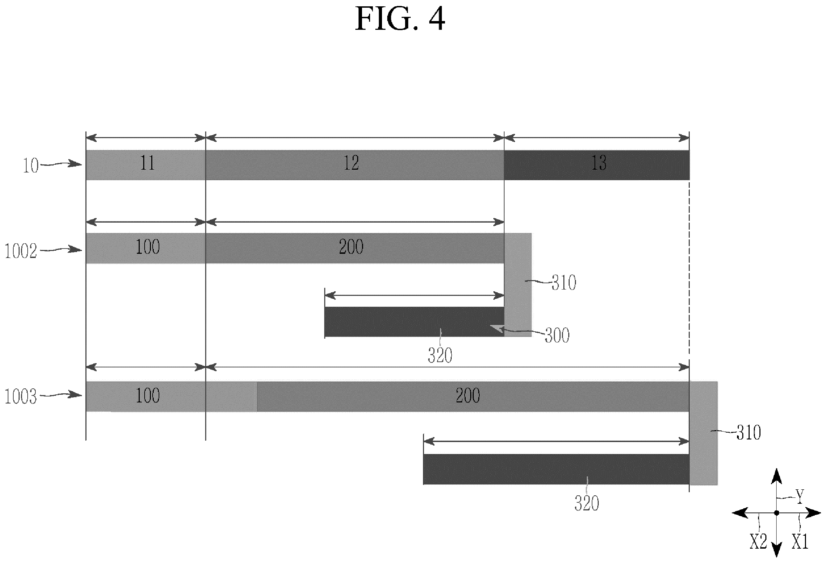

Hereinafter, apparatuses for calcining a positive electrode material of a secondary battery according to another embodiment will be described with reference to FIG. 4. Parts different from the apparatus for calcining a positive electrode material of a secondary battery according to an embodiment described above will be described below.

FIG. 4 is a view illustrating apparatuses for calcining a positive electrode material of a secondary battery according to another embodiment. FIG. 4 is a plan view schematically illustrating an apparatus for calcining a positive electrode material of a secondary battery. Although a conventional apparatus for calcining a positive electrode material of a secondary battery is also illustrated in FIG. 4, the conventional apparatus for calcining a positive electrode material of a secondary battery is not limited to the structures shown in FIG. 4 and may have various known structures.

Referring to FIG. 4, a first apparatus 1002 for calcining a positive electrode material of a secondary battery and a second apparatus 1003 for calcining a positive electrode material of a secondary battery according to another embodiment include a temperature rising section 100, a temperature maintaining section 200, and a cooling section 300.

The cooling section 300 includes a first connection section 310 connected to the temperature maintaining section 200 and extending in a third direction Y intersecting the first direction X₁ and the second direction X₂ in the horizontal direction, and a first section 320 connected to the first connection section 310 and extending in the second direction X₂. The first section 320 may have a lower temperature than the first connection section 310, but is not limited thereto.

For example, the entire conventional apparatus 10 for calcining a positive electrode material of a secondary battery including the temperature rising section 11, the temperature maintaining section 12, and the cooling section 13 extending in the first direction X₁ may have a length of 44.1 m in the first direction X₁, and may have a total calcination time of 20 hours with a temperature rising time of 4 hours in the temperature rising section 11, a temperature maintaining time of 10 hours in the temperature maintaining section 12, and a cooling time of 6 hours in the cooling section 13. The sagger transfer speed of the conventional apparatus 10 for calcining a positive electrode material of a secondary battery may be 2.205 m/h as 44.1 m/20 hours.

In the second apparatus 1003 for calcining a positive electrode material of a secondary battery, the temperature rising section 100 and the temperature maintaining section 200 extending in the first direction X₁ may have a length of 44.1 m in the first direction X₁, and the cooling section 300 extending from the temperature maintaining section 200 curved in a "⊂"-shape may have a length of 18.9 m in the second direction X₂. It may have a total calcination time of 20 hours with a temperature rising time of 4 hours in the temperature rising section 100, a temperature maintaining time of 10 hours in the temperature maintaining section 200, and a cooling time of 6 hours in the cooling section 300. The sagger transfer speed of the second apparatus 1003 for calcining a positive electrode material of a secondary battery may be 3.15 m/h as 63 m/20 hours.

As described above, even though the second apparatus 1003 for calcining a positive electrode material of a secondary battery has the same length of 44.1 m in the first direction X₁ as the conventional apparatus 10 for calcining a positive electrode material of a secondary battery, since the cooling section 300 extends with a length of 18.9 m in the second direction X₂ while being separated from the temperature maintaining section 200, the sagger transfer speed is increased by 43% at the same calcination time of 20 hours. Therefore, the production amount of the positive electrode material is increased by 43%.

That is, the first apparatus 1002 for calcining a positive electrode material of a secondary battery and the second apparatus 1003 for calcining a positive electrode material of a secondary battery are provided, in which the production amount of the positive electrode material is increased compared to the conventional apparatus 10 for calcining a positive electrode material of a secondary battery.

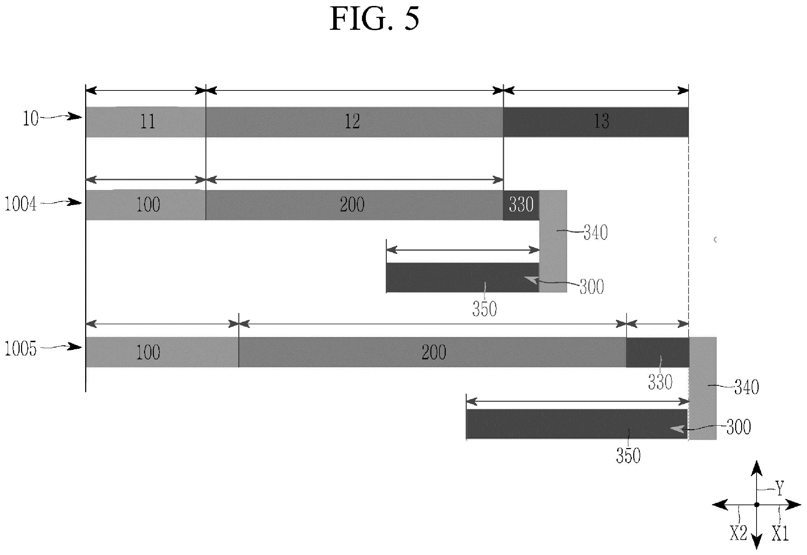

Hereinafter, apparatuses for calcining a positive electrode material of a secondary battery according to yet another embodiment will be described with reference to FIG. 5. Parts different from the apparatus for calcining a positive electrode material of a secondary battery according to an embodiment described above will be described below.

FIG. 5 is a view illustrating apparatuses for calcining a positive electrode material of a secondary battery according to yet another embodiment. FIG. 5 is a plan view schematically illustrating an apparatus for calcining a positive electrode material of a secondary battery. Although a conventional apparatus for calcining a positive electrode material of a secondary battery is also illustrated in FIG. 5, the conventional apparatus for calcining a positive electrode material of a secondary battery is not limited to the structures shown in FIG. 5 and may have various known structures.

A third apparatus 1004 for calcining a positive electrode material of a secondary battery and a fourth apparatus 1005 for calcining a positive electrode material of a secondary battery according to yet another embodiment include a temperature rising section 100, a temperature maintaining section 200, and a cooling section 300.

The cooling section 300 includes a second section 330 connected to the temperature maintaining section 200 and extending in the first direction X₁ of the horizontal direction, a second connection section 340 connected to the second section 330 and extending in a third direction Y intersecting the first direction X₁ and the second direction X₂ in the horizontal direction, and a third section 350 connected to the second connection section 340 and extending in the second direction X₂. The second section 330 and the third section 350 may have a lower temperature than the second connection section 340, but are not limited thereto. A length of the third section 350 may be longer than a length of the second section 330, but is not limited thereto.

For example, the entire conventional apparatus 10 for calcining a positive electrode material of a secondary battery including the temperature rising section 11, the temperature maintaining section 12, and the cooling section 13 extending in the first direction X₁ may have a length of 44.1 m in the first direction X₁, and may have a total calcination time of 20 hours with a temperature rising time of 4 hours in the temperature rising section 11, a temperature maintaining time of 10 hours in the temperature maintaining section 12, and a cooling time of 6 hours in the cooling section 13. The sagger transfer speed of the conventional apparatus 10 for calcining a positive electrode material of a secondary battery may be 2.205 m/h as 44.1 m/20 hours.

In the fourth apparatus 1005 for calcining a positive electrode material of a secondary battery, the temperature rising section 100, the temperature maintaining section 200, and the second section 330 extending in the first direction X₁ may have a length of 44.1 m in the first direction X₁, and the third section 350 of the cooling section 300 extending curved in a "⊂"-shape from the second section 330 of the cooling section 300 may have a length of 14.7 m. It may have a total calcination time of 20 hours with a temperature rising time of 4 hours in the temperature rising section 100, a temperature maintaining time of 10 hours in the temperature maintaining section 200, a cooling time of 1 hour in the second section 330 of the cooling section 300, and a cooling time of 5 hours in the third section 350. The sagger transfer speed of the fourth apparatus 1005 for calcining a positive electrode material of a secondary battery may be 2.94 m/h as 58.8 m/20 hours.

As described above, even though the fourth apparatus 1005 for calcining a positive electrode material of a secondary battery has the same length of 44.1 m in the first direction X₁ as the conventional apparatus 10 for calcining a positive electrode material of a secondary battery, since the cooling section 300 extends with a length of 14.7 m in the second direction X₂ while being separated from the temperature maintaining section 200, the sagger transfer speed is increased by 33% at the same calcination time of 20 hours. Therefore, the production amount of the positive electrode material is increased by 33%.

That is, the third apparatus 1004 for calcining a positive electrode material of a secondary battery and the fourth apparatus 1005 for calcining a positive electrode material of a secondary battery are provided, in which the production amount of the positive electrode material is increased compared to the conventional apparatus 10 for calcining a positive electrode material of a secondary battery.

While embodiments of the present invention have been described in detail above, the scope of rights of the present invention is not limited thereto, and various modifications and improvements by those skilled in the art using the basic concept of the present invention defined in the following claims also belong to the scope of rights of the present invention.

### [Description of Reference Numerals]

Temperature rising section 100, Temperature maintaining section 200, Cooling section 300

## Claims

1. An apparatus for calcining a positive electrode material of a secondary battery by moving a sagger accommodating the positive electrode material of the secondary battery in a horizontal direction, the apparatus comprising:
a temperature rising section extending in a first direction of the horizontal direction;
a temperature maintaining section connected to the temperature rising section and extending in the first direction; and
a cooling section connected to the temperature maintaining section and extending in a second direction different from the first direction in the horizontal direction,
wherein the sagger passes from the temperature rising section through the temperature maintaining section and through the cooling section.

2. The apparatus for calcining a positive electrode material of a secondary battery of claim 1, wherein the second direction is an opposite direction to the first direction.

3. The apparatus for calcining a positive electrode material of a secondary battery of claim 1, wherein the sagger comprises a plurality of saggers, and the plurality of saggers move in the horizontal direction while forming a plurality of rows.

4. The apparatus for calcining a positive electrode material of a secondary battery of claim 3, wherein a row interval between the plurality of saggers in the temperature maintaining section is narrower than a row interval between the plurality of saggers in the cooling section.

5. The apparatus for calcining a positive electrode material of a secondary battery of claim 3, wherein a row interval between the plurality of saggers in the cooling section is wider than a row interval between the plurality of saggers in the temperature maintaining section.

6. The apparatus for calcining a positive electrode material of a secondary battery of claim 1, wherein a width of the cooling section in the horizontal direction is greater than a width of the temperature maintaining section in the horizontal direction.

7. The apparatus for calcining a positive electrode material of a secondary battery of claim 1, wherein the cooling section comprises:
a first connection section connected to the temperature maintaining section and extending in a third direction intersecting the first direction and the second direction in the horizontal direction; and
a first section connected to the first connection section and extending in the second direction.

8. The apparatus for calcining a positive electrode material of a secondary battery of claim 7, wherein the first section has a lower temperature than the first connection section.

9. The apparatus for calcining a positive electrode material of a secondary battery of claim 1, wherein the cooling section comprises:
a second section connected to the temperature maintaining section and extending in the first direction;
a second connection section connected to the second section and extending in a third direction intersecting the first direction and the second direction in the horizontal direction; and
a third section connected to the second connection section and extending in the second direction.

10. The apparatus for calcining a positive electrode material of a secondary battery of claim 9, wherein the second section and the third section have a lower temperature than the second connection section.

11. The apparatus for calcining a positive electrode material of a secondary battery of claim 10, wherein a length of the third section is longer than a length of the second section.

12. The apparatus for calcining a positive electrode material of a secondary battery of claim 1, further comprising a transfer section connecting the cooling section and the temperature rising section and transferring the sagger from the cooling section to the temperature rising section.

13. The apparatus for calcining a positive electrode material of a secondary battery of claim 1, wherein a temperature of the temperature maintaining section is higher than a temperature of the temperature rising section and a temperature of the cooling section.

14. The apparatus for calcining a positive electrode material of a secondary battery of claim 1, wherein the sagger comprises a plurality of saggers, and the temperature maintaining section comprises a heating means positioned between adjacent saggers among the plurality of saggers.

15. The apparatus for calcining a positive electrode material of a secondary battery of claim 14, wherein the cooling section comprises a cooling means positioned between adjacent saggers among the plurality of saggers.
